# EUROPEAN PATENT SPECIFICATION

(11) **EP 3 376 190 B1**
(45) Date of publication and mention of the grant of the patent: **09.06.2021**
(21) Application number: 16863922.7
(22) Date of filing: 04.10.2016
(51) Int. Cl.: G01K 7/22, G01K 1/08, G01K 1/12, F02D 41/30

(54) **TEMPERATURE SENSOR AND POSITION SENSING DEVICE**
TEMPERATURSENSOR UND POSITIONSERFASSUNGSVORRICHTUNG
CAPTEUR DE TEMPÉRATURE ET DISPOSITIF DE DÉTECTION DE POSITION

(30) Priority: 12.11.2015 JP 2015222110
(43) Date of publication of application: 19.09.2018
(73) Proprietor: Alps Alpine Co., Ltd., Tokyo 145-8501 (JP)
(72) Inventor: SUGAWARA, Taiji, Tokyo 145-8501 (JP); SAITO, Kyozo, Tokyo 145-8501 (JP)
(74) Representative: Schmitt-Nilson Schraud Waibel Wohlfrom Patentanwälte Partnerschaft mbB
(86) International application number: PCT/JP2016/079550
(87) International publication number: WO 2017/081958

(56) References cited:
- JP-A- 2007 093 379
- JP-A- 2008 020 395
- JP-A- 2010 151 805
- JP-A- 2010 151 805
- JP-U- S49 105 178
- JP-U- S49 105 178
- JP-U- S63 168 833
- JP-U- S63 168 833
- US-A1- 2005 265 426

## Description

### Technical Field

The present invention relates to a temperature sensor for measuring a temperature of a fluid, such as air taken into an engine, and to a position detection device including the temperature sensor.

### Background Art

Recently, temperature sensors have been used in various types of control in a vehicle. The temperature sensor includes a temperature sensor element coated with glass, for example, and has a structure that the temperature sensor element is arranged in a tip portion of a tip-closed tube for protection purposes. A tip of the temperature sensor element is held in direct contact with the tube to increase efficiency of heat transfer to the temperature sensor element. However, detection accuracy of the temperature sensor element degrades if heat dissipates. One solution conceivable to cope with the above problem is a method of avoiding dissipation of heat to be transferred to the temperature sensor element by providing, for example, an air layer inside the tube at a position except for the tip portion.

Patent Literature (PTL) 1 discloses an example of a structure including the air layer as described above. Fig. 8 is a sectional view of a temperature sensor 900 disclosed in PTL 1. As illustrated in Fig. 8, a temperature sensor element 921 is arranged inside a tube 911 at a tip 912. In the disclosed structure, a back end 945 of a glass tube 941 is pushed toward the tip side by utilizing deformation that is generated in a sealing member 971. As a result, the temperature sensor element 921 arranged at the tip side is pressed against the tip 912 of the tube 911 from the inside.

### Citation List

### Patent Literature

PTL 1: Japanese Unexamined Patent Application Publication No. 2012-42451

US 2005/265426 A1 discloses a temperature sensor including a cylindrical metal tube having a front end side blocked, a thermistor element, and a sheath member connected to the thermistor element (2) and held in the inside of the metal tube.

JP S63 168833 U discloses a temperature sensor comprising a protection pipe and a temperature sensor element, a part of the protection pipe near the temperature sensor element has been removed to insert heat insulating material.

JP S49 105178 U discloses a sheath having a temperature measuring portion, an insulated member formed of a thermally conductive insulator fixed in contact with the inner wall surface of the temperature measuring portion, and the sheath of the insulating member.

### Summary of Invention

### Technical Problem

However, the above-described related art has a problem that a sensor structure is complicated because of the necessity of the structure for biasing the glass tube 941 toward the tip side by the sealing member 971. Thus, there has been a demand for a structure capable of preventing dissipation of heat to be transferred to the temperature sensor with a simpler configuration.

The present invention has been made with intent to solve the above-described problem, and an object of the present invention is to provide a temperature sensor having higher temperature sensing performance with a simpler configuration, and to provide a position detection device including the temperature sensor.

### Solution to Problem

The present invention relates to a temperature sensor, a position detection device, and a method of manufacturing the same according to the appended claims.

### Advantageous Effects of Invention

According to the present invention, since the heat insulating section is disposed between the temperature sensor element and the retaining portion, the structure in which heat is less dissipated from the temperature sensor element can be obtained. As a result, the temperature sensor having higher temperature sensing performance can be obtained with a simpler configuration. In addition, the position detection device equipped with the temperature sensor having higher temperature sensing performance can be obtained.

### Brief Description of Drawings

[Fig. 1] Fig. 1 is a sectional view of a temperature sensor according to a first embodiment of the present invention.
[Fig. 2] Fig. 2 is an external view of a heat insulating member; specifically, Fig. 2(a) is a plan view, and Fig. 2(b) is a front view.
[Fig. 3] Fig. 3 is a sectional view illustrating a state in which a holder, the heat insulating member, and a substrate are fixed to a wire member that is connected to a temperature sensor element.
[Fig. 4] Fig. 4 is a sectional view of a case in a state before attaching a cap.
[Fig. 5] Fig. 5 is a sectional view illustrating a state in which the temperature sensor element is inserted into a tubular portion of the case.
[Fig. 6] Fig. 6 is a sectional view illustrating a state in which a retaining material is filled.
[Fig. 7] Fig. 7 is a block diagram of a position detection device according to a second embodiment of the present invention.

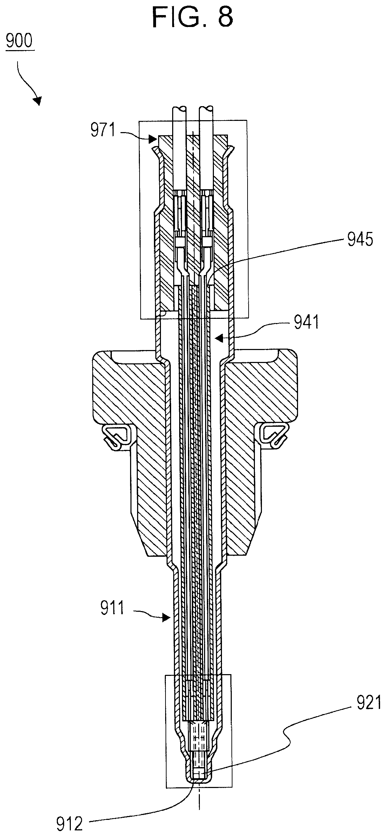

[Fig. 8] Fig. 8 is a sectional view of a temperature sensor of related art.

### Description of Embodiments

Embodiments of the present invention will be described in detail below with reference to the drawings. It is to be noted that dimensions of components in the drawings are changed as appropriate for easier understanding.

### [First embodiment]

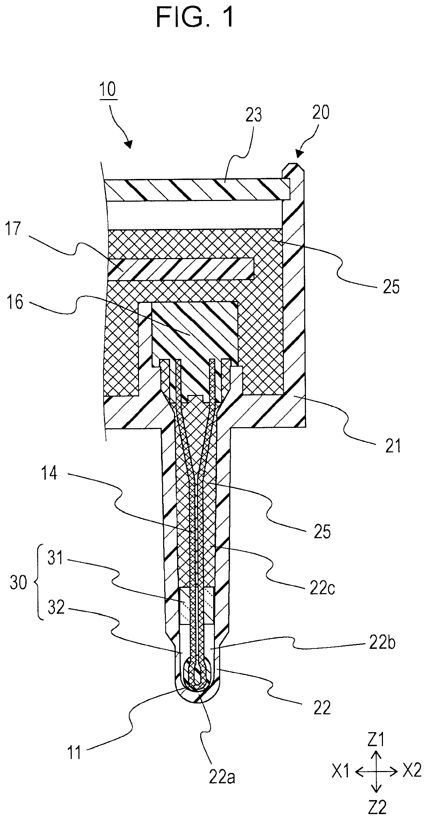

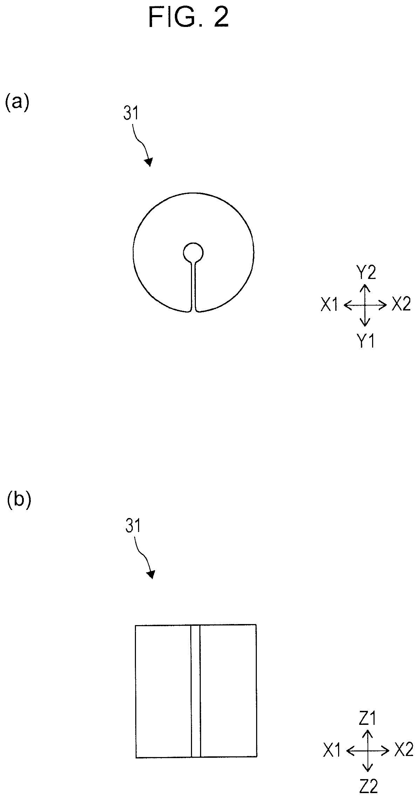

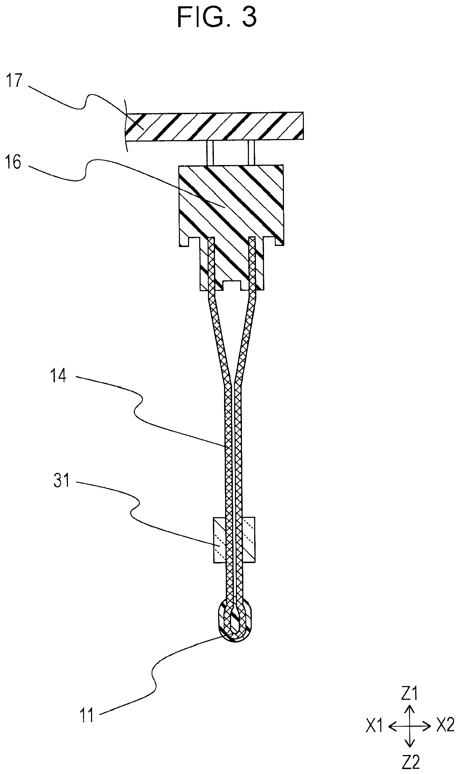

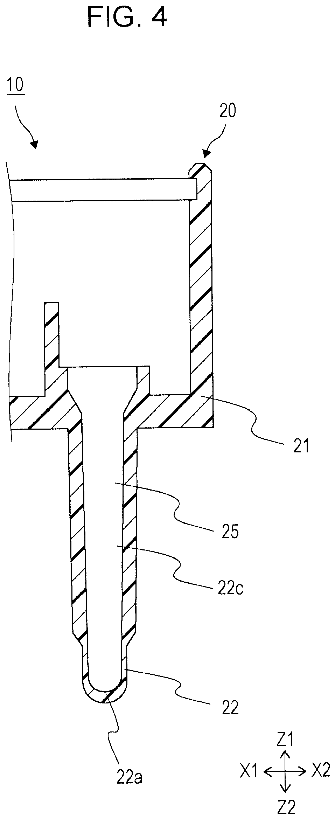

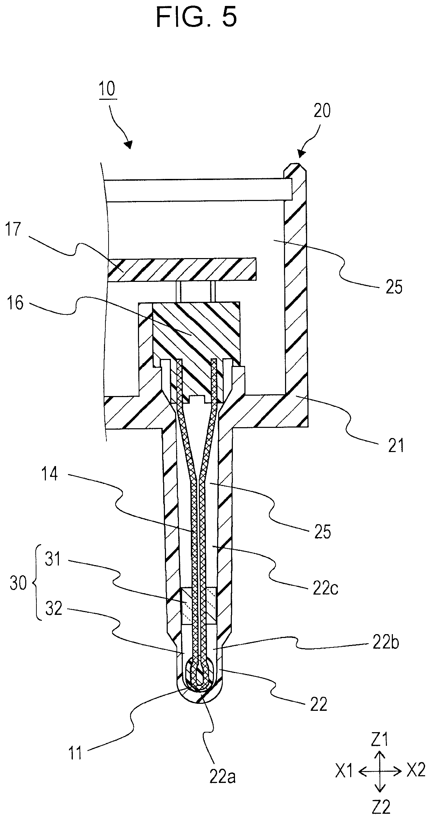

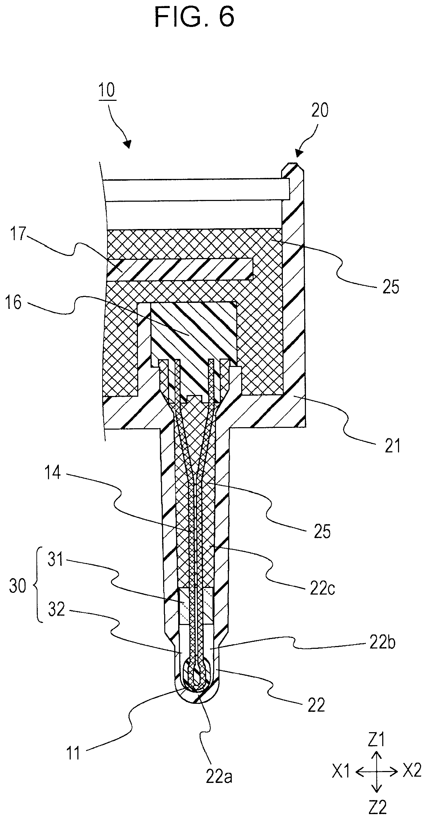

Fig. 1 is a sectional view of a temperature sensor 10 according to a first embodiment of the present invention. Fig. 2 is an external view of a heat insulating member 31; specifically, Fig. 2(a) is a plan view, and Fig. 2(b) is a front view. Fig. 3 is a sectional view illustrating a state in which a holder 16, the heat insulating member 31, and a substrate 17 are fixed to a wire member 14 that is connected to a temperature sensor element 11. Fig. 4 is a sectional view of a case 20 in a state before attaching a cap 23. Fig. 5 is a sectional view illustrating a state in which the temperature sensor element 11 is inserted into a tubular portion 22 of the case 20. Fig. 6 is a sectional view illustrating a state in which a retaining material 25 is filled.

The temperature sensor 10 according to the first embodiment of the present invention includes the temperature sensor element 11 accommodated in the case 20, and it is constituted as illustrated in the sectional view of Fig. 1.

The case 20 is molded of a synthetic resin material, and includes a box-shaped body portion 21 having an open surface, the tubular portion 22 projecting outward (in a direction denoted by Z2 in Fig. 1) from the body portion 21 and formed in a tubular shape closed at the side defining a tip 22a, and the cap 23 closing the open surface of the body portion 21.

The temperature sensor element 11 changes an electrical output depending on temperature, and enables an ambient temperature to be measured from a value of the electrical output. The temperature sensor element 11 in this embodiment is formed by using a Thermistor that is a resistor exhibiting a great change in electrical resistance with respect to a temperature change. The wire member 14 connected to the temperature sensor element 11 is fixed to the holder 16 and is electrically connected to a not-illustrated wiring portion of the substrate 17. Furthermore, the heat insulating member 31 is attached to the wire member 14.

As illustrated in Fig. 1, the retaining material 25 is filled into a gap between the wire member 14 and the tubular portion 22, and a gap between each of the holder 16 and the substrate 17 and the body portion 21. The retaining material 25 used in this embodiment is a one-component epoxy resin and has thermal conductivity of 0.3 [W/(m·K)] at 20°C. A predetermined amount of the retaining material 25 is filled in a liquefied state and then cured by heat treatment. The temperature sensor 10 according to this embodiment further includes, between the heat insulating member 31 and the temperature sensor element 11, a gap portion 22b where the retaining material 25 is not filled and gas 32 remains. The gas 32 in this embodiment is air, and the thermal conductivity of air at 20°C is 0.024 [W/ (m·K)] .

The heat insulating member 31 is preferably made of a material having physical properties being less heat-transferable than the retaining material 25. The heat insulating member 31 used in this embodiment is made of foam polystyrene that is less heat-transferable than the retaining material 25, and that has no fluidity. While the thermal conductivity of the retaining material 25 at 20°C is 0.3 [W/(m·K)], the thermal conductivity of the heat insulating member 31 at 20°C is 0.03 [W/(m·K)]. As illustrated in Fig. 2, the heat insulating member 31 has a column-like shape in external view and includes a cut formed to extend from a lateral surface toward a center with a hole penetrating through a central portion. Thus, the heat insulating member 31 is elastically deformable, and it can be attached to the wire member 14 in a state fixed thereto.

The temperature sensor element 11 is pressed against the tip 22a of the tubular portion 22 of the case 20. Therefore, heat transfer between the tip 22a and the temperature sensor element 11 is improved, and an ambient temperature around the tip 22a of the tubular portion 22 can be measured with higher accuracy. Furthermore, both the heat insulating member 31 being less heat-transferable than the retaining material 25 and the gas 32 kept in the gap portion 22b between the heat insulating member 31 and the temperature sensor element 11 function as a heat insulating section 30 and suppresses heat transfer toward the body portion 21. Accordingly, when the ambient temperature around the tip 22a of the tubular portion 22 is changed, the temperature sensor element 11 can operate more promptly in response to the temperature change with higher thermal responsivity.

The temperature sensor 10 according to this embodiment can be manufactured through steps illustrated in Figs. 3 to 6, for example.

As illustrated in Fig. 3, the wire member 14 connected to the temperature sensor element 11 is fixed to the holder 16.- The heat insulating member 31 is fixed to the wire member 14 at a position near the temperature sensor element 11. Furthermore, the wire member 14 is electrically connected to the substrate 17. Although the cut is formed in the heat insulating member 31 in this embodiment to reduce a gap between the heat insulating member 31 and the wire member 14, the heat insulating member 31 may be fixed to the wire member 14 by using an adhesive or the like. In the latter case, even when the gap is somewhat large, the gap can be closed with the adhesive or the like. When the gap is closed with the adhesive or the like, the heat insulating member 31 can be formed by using any types of materials having physical properties being less heat-transferable without being limited to the material that is susceptible to elastic deformation. For example, a relatively hard phenol resin can also be used.

As illustrated in Fig. 4, the case 20 is prepared in a state before attaching the cap 23. Then, as illustrated in Fig. 5, the temperature sensor element 11 is inserted into the tubular portion 22 to be arranged at the tip 22a. In this connection, the external shape of the heat insulating member 31 is designed to form a small gap relative to an inner wall of the tubular portion 22, and hence not to impede the temperature sensor element 11 from being fully pushed in up to the tip 22a. Although the holder 16 comes into contact with the body portion 21, the temperature sensor element 11 can be brought into a securely pushed-in state for the reason that the wire member 14 is prepared in a slightly longer length and is flexed when the temperature sensor element 11 is pushed in up to the tip 22a.

Next, as illustrated in Fig. 6, under a condition of holding the temperature sensor 10 with the Z2 direction facing downward, the retaining material 25 is filled in the liquefied state into the gap between the wire member 14 and the tubular portion 22, and the gap between each of the holder 16 and the substrate 17 and the body portion 21. At that time, since the heat insulating member 31 is arranged in advance, the gap portion 22b where the retaining material 25 is not filled is formed between the heat insulating member 31 and the temperature sensor element 11 due to the action of surface tension, and the atmosphere remaining in the gap portion 22b is kept as the gas 32. Moreover, since the heat insulating member 31 is arranged in the state fixed to the wire member 14, the temperature sensor element 11 is pushed toward the tip 22a of the tubular portion 22 with the heat insulating member 31 interposed therebetween when the retaining material 25 is filled. As a result, the temperature sensor element 11 can be pressed against the tip 22a of the tubular portion 22 without arranging any biasing mechanism. In order to make the temperature sensor element 11 securely fixed to the tip 22a, the retaining material 25 may be previously coated over an end portion of the temperature sensor element 11.

Thereafter, the retaining material 25 is cured by heat treatment, thus resulting in a state that the retaining material 25 retains the wire member 14. Finally, the cap 23 is attached to the case 20.

Since the heat insulating section 30 is disposed between the temperature sensor element 11 and a retaining portion 22c, a structure in which heat is less dissipated from the temperature sensor element 11 can be obtained.

Advantageous effects obtained with this embodiment will be described below.

The temperature sensor 10 according to this embodiment includes the case 20, the temperature sensor element 11, and the wire member 14 connected to the temperature sensor element 11. The case 20 includes the body portion 21, and the tubular portion 22 projecting outward from the body portion 21 and formed in the tubular shape closed at the side defining the tip 22a. The temperature sensor element 11 is arranged within the tubular portion 22 at the tip 22a. The retaining portion 22c, which is filled with the retaining material 25 to support the wire member 14, is disposed within the tubular portion 22 at a position closer to the body portion 21 than the temperature sensor element 11. In addition, the heat insulating section 30 including the heat insulating member 31 being less heat-transferable than the retaining material 25 is disposed between the temperature sensor element 11 and the retaining portion 22c.

With the features described above, since the provision of the heat insulating section 30 between the temperature sensor element 11 and the retaining portion 22c gives the structure in which heat is less dissipated from the temperature sensor element 11, the temperature sensor 10 having higher temperature sensing performance can be obtained with a simpler configuration.

In the temperature sensor 10 according to this embodiment, the heat insulating section 30 is preferably constituted such that the heat insulating member 31 is arranged in the state fixed to the wire member 14 at a position near the temperature sensor element 11.

With the feature described above, since the heat insulating member 31 is arranged in the state fixed to the wire member 14, the temperature sensor element 11 is pushed toward the tip 22a of the tubular portion 22 with the heat insulating member 31 interposed therebetween when the retaining material 25 is filled. As a result, the temperature sensor element 11 can be pressed against the tip 22a of the tubular portion 22 without arranging any biasing mechanism. Hence the temperature sensing performance is improved.

Furthermore, in the temperature sensor 10 according to this embodiment, the heat insulating member 31 is made of foam polystyrene or a phenol resin. While the thermal conductivity of the retaining material 25 at 20°C is 0.3 [W/ (m-K)], the thermal conductivity of the heat insulating member 31 is 0.03 [W/(m·K)] in the case of using foam polystyrene or a phenol resin and 0.13 to 0.25 [W/(m·K)] in the case of using a phenol resin. With the feature described above, since the heat insulating member is made of the material being less heat-transferable than the retaining material 25 and having no fluidity, the heat insulating member can be easily arranged in place.

Moreover, in the temperature sensor 10 according to this embodiment, the heat insulating section 30 includes the heat insulating member 31 and the gas 32 kept between the heat insulating member 31 and the temperature sensor element 11. With the feature described above, thermal insulation is further enhanced by utilizing, as part of the heat insulating section 30, the gas that is less heat-transferable.

### [Second Embodiment]

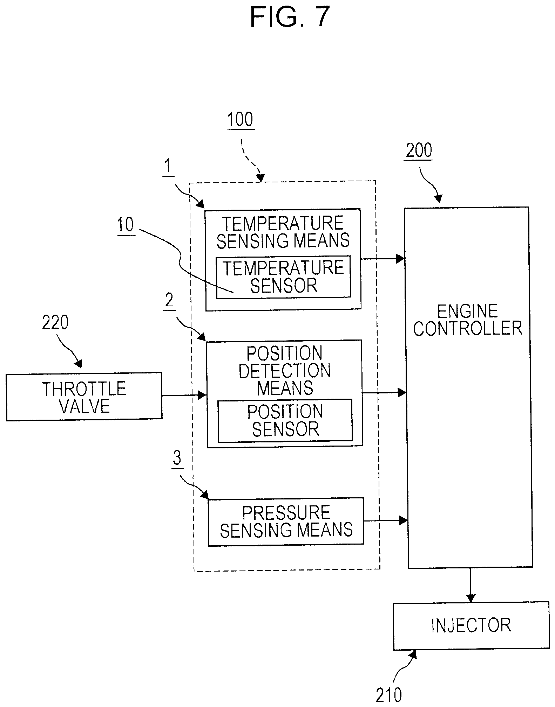

Fig. 7 is a block diagram of a position detection device 100 according to a second embodiment of the present invention.

As illustrated in Fig. 7, the position detection device according to this embodiment represents an example in which the position detection device 100 is attached to a throttle valve 220 for controlling an engine output. It is to be noted that the position detection device 100 can be used in various applications without being limited to such an example.

The position detection device 100 illustrated in Fig. 7 includes position detection means 2 configured to detect a position of a detection object, temperature sensing means 1 configured to sense an ambient temperature around the detection object, and pressure sensing means 3 configured to sense a pressure of taken-in gas (atmosphere). The temperature sensing means 1 includes the temperature sensor 10 according to the first embodiment.

The position detection means 2 detects the position of the detection object that is moved in conjunction with a rotation shaft for adjusting an opening degree of the throttle valve 220. More specifically, the position detection means 2 is constituted by using a variable resistor exhibiting a resistance value that is changed with sliding of a movable contact over a resistive element, the movable contact being moved depending on the position of the detection object, or using a magnetic sensor for sensing magnetic force of a magnet that is moved depending on the position of the detection object. A method of sensing a rotation angle in conjunction with the rotation shaft of the throttle valve 220, or a method of detecting a position through mechanical conversion to a linear movement can be used, for example.

A pressure sensor, for example, can be used as the pressure sensing means 3.

Output values of the position detection means 2 and the pressure sensing means 3 are transmitted to an engine controller 200, and an amount of fuel injected from an injector 210 is optimized by the engine controller 200.

In the position detection device 100, the case 20 in the first embodiment is used as a case common to the position detection means 2 and the pressure sensing means 3 as well such that the temperature sensing means 1, the position detection means 2, and the pressure sensing means 3 can be assembled into an integral unit. It is therefore possible to detect the ambient temperature around the detection object to be detected by the position detection means 2 at a close position with the small-sized device. Thus, the amount of fuel injected from the injector 210 can be more appropriately controlled depending on the position of the detection object. As a result, exhaust gas from an engine can be made cleaner.

Advantageous effects obtained with this embodiment will be described below.

The position detection device 100 according to this embodiment is featured in that the device includes the position detection means 2 configured to detect the position of the detection object, and the temperature sensing means 1 configured to sense the ambient temperature around the detection object, and that the temperature sensing means 1 includes the above-described temperature sensor 10.

With the features described above, control depending on the position of the detection object can be more appropriately performed by sensing the ambient temperature around the detection object to be detected by the position detection means 2. The present invention may be modified, by way of example, as follows. The following modifications also fall within the technical scope of the present invention.
(1) While, in the embodiment, thermistor is used as the temperature sensor element 11, a thermocouple may be used instead.
(2) While, in the embodiment, the tubular portion 22 of the case 20 is integrally formed of a synthetic resin material, a portion including the tip 22a may be formed of a composite material by using a material having higher thermal conductivity. Higher thermal responsivity can be obtained in the latter case.
(3) While, in the embodiment, the heat insulating section 30 includes the gas 32 kept between the heat insulating member 31 and the temperature sensor element 11, the heat insulating member 31 and the temperature sensor element 11 may be arranged in contact with each other when the performance of the heat insulating member 31 is sufficient.

### Reference Signs List

- 1: temperature sensing means
- 2: position detection means
- 3: pressure sensing means
- 10: temperature sensor
- 11: temperature sensor element
- 14: wire member
- 16: holder
- 17: substrate
- 20: case
- 21: body portion
- 22: tubular portion
- 22a: tip
- 22b: gap portion
- 22c: retaining portion
- 23: cap
- 25: retaining material
- 30: heat insulating section
- 31: heat insulating member
- 32: gas
- 100: position detection device
- 200: engine controller
- 210: injector
- 220: throttle valve

## Claims

1. A temperature sensor (10) comprising:
a case (20) including a body portion (21) and a tubular portion (22) projecting outward from the body portion (21), the tubular portion (22) being formed in a tubular shape closed at a side defining a tip (22a);
a temperature sensor element (11) arranged within the tubular portion (22) at the tip (22a);
a wire member (14) having one end connected to the temperature sensor element (11);
a holder (16) to which the other end of the wire member (14) is fixed;
a substrate (17) to which the other end of the wire member (14) is electrically connected, the holder (16) and the substrate (17) being placed in the body portion (21);
a retaining portion (22c) disposed within the tubular portion (22) at a position closer to the body portion (21) than the temperature sensor element (11), the retaining portion (22c) being filled with a retaining material (25) to support the wire member (14), wherein a gap between the holder (16), the substrate (17), and the body portion (21) of the case (20) is filled with the retaining material (25); and
a heat insulating section (30) disposed between the temperature sensor element (11) and the retaining portion (22c), the heat insulating section (30) including a heat insulating member (31) made of a less heat-transferable material than the retaining material (25),
wherein the heat insulating member (31) in the heat insulating section (30) is fixed around the wire member (14) at a position near the temperature sensor element (11),
wherein the temperature sensor element (11) is pressed against the tip (22a) of the tubular portion (22),
wherein the heat insulating member (31) is made of foam polystyrene or a phenol resin,
wherein the heat insulating section (30) includes a gap portion (22b) filled with gas kept between the heat insulating member (31) and the temperature sensor element (11), and
wherein the retaining material (25) is made of epoxy.

2. The temperature sensor according to claim 1, wherein the retaining material (25) is made of epoxy with a thermal conductivity of 0.3 [W/(m.K)] at 20°C, the heat insulating member (31) is made of foam polystyrene with a thermal conductivity of 0.03 [W/(m.K)] at 20°C, and the gas in the gap portion (22b) is air with a thermal conductivity of 0.024 [W/(m.K)] at 20°C.

3. A position detection device (100) comprising position detection means (2) configured to detect a position of a detection object, and temperature sensing means (1) configured to sense an ambient temperature around the detection object, wherein the temperature sensing means (1) includes the temperature sensor (10) according to claim 1 or 2.

4. A method of manufacturing a temperature sensor (10) according to claim 1 or 2, the method comprising:
preparing a first part of the temperature sensor (10), the first part including a wire member (14), a temperature sensor element (11) connected to one end of the wire member (14), a holder (16) to which the other end of the wire member (14) is fixed, a substrate (17) to which the other end of the wire member (14) is electrically connected, and a heat insulating member (17) fixed around the wire member (14) at a position near the temperature sensor element (11);
preparing a case (20) which includes a box-shaped body portion (21) having an open surface, a tubular portion (22) projecting outward from the body portion (21) and formed in a tubular shape closed at a side defining a tip (22a), and a cap (23) closing the open surface of the body portion (21);
inserting the first part of the temperature sensor (10) into the case (20), wherein the temperature sensor element (11) is inserted into the tubular portion (22) to be arranged at the tip (22a), and the holder (16) and the substrate (17) are placed in the body portion (21);
filing a retaining material (25) in a liquefied state into a gap between the wire member (14) and the tubular portion (22) and a gap between the holder (16), the substrate (17), and the body portion (21); and
curing by heat treatment the retaining material (25), resulting in a state that the retaining material (25) retains the wire member (14).

5. The method according to claim 4, wherein the wire member (14) is flexed when the temperature sensor element (11) is pushed in up to the tip (22a) so that the temperature sensor element (11) is brought into a securely pushed-in state.

## Patentansprüche

1. Temperatursensor (10), aufweisend:
ein Gehäuse (20) mit einem Körperbereich (21) und einem rohrförmigen Bereich (22), der von dem Körperbereich (21) nach außen ragt, wobei der rohrförmige Bereich (22) in einer Rohrform ausgebildet ist, die auf einer eine Spitze (22a) bildenden Seite geschlossen ist;
ein Temperatursensorelement (11), das im Inneren des rohrförmigen Bereichs (22) an der Spitze (22a) angeordnet ist;
ein Drahtelement (14), das mit einem Ende mit dem Temperatursensorelement (11) verbunden ist;
einen Halter (16), an dem das andere Ende des Drahtelements (14) befestigt ist;
ein Substrat (17), mit dem das andere Ende des Drahtelements (14) elektrisch verbunden ist, wobei der Halter (16) und das Substrat (17) in dem Körperbereich (21) platziert sind;
einen Haltebereich (22c), der im Inneren des rohrförmigen Bereichs (22) an einer Stelle angeordnet ist, die sich näher bei dem Körperbereich (21) als das Temperatursensorelement (11) befindet, wobei der Haltebereich (22c) mit einem Haltematerial (25) gefüllt ist, um das Drahtelement (14) zu stützen, wobei ein Spalt zwischen dem Halter (16), dem Substrat (17) und dem Körperbereich (21) des Gehäuses (20) mit dem Haltematerial (25) gefüllt ist;
und
einen Wärmeisolierbereich (30), der zwischen dem Temperatursensorelement (11) und dem Haltebereich (22c) angeordnet ist, wobei der Wärmeisolierbereich (30) ein Wärmeisolierelement (31) aufweist, das aus einem weniger wärmeübertragungsfähigen Material als das Haltematerial (25) gebildet ist,
wobei das Wärmeisolierelement (31) in dem Wärmeisolierbereich (30) um das Drahtelement (14) herum an einer Stelle in der Nähe des Temperatursensorelements (11) befestigt ist,
wobei das Temperatursensorelement (11) gegen die Spitze (22a) des rohrförmigen Bereichs (22) gedrückt ist,
wobei das Wärmeisolierelement (31) aus einem Schaumpolystyrol oder einem Phenolharz gebildet ist,
wobei der Wärmeisolierbereich (30) einen Spaltbereich (22b) aufweist, der mit Gas gefüllt ist, das zwischen dem Wärmeisolierelement (31) und dem Temperatursensorelement (11) gehalten ist, und
wobei das Haltematerial (25) aus Epoxy gebildet ist.

2. Temperatursensor nach Anspruch 1,
wobei das Haltematerial (25) aus Epoxy mit einer Wärmeleitfähigkeit von 0,3 [W/(m.K)] bei 20°C gebildet ist, wobei das Wärmeisolierelement (31) aus Schaumpolystyrol mit einer Wärmeleitfähigkeit von 0,03 [W/(m.K)] bei 20°C gebildet ist, und wobei das Gas in dem Spaltbereich (22b) Luft mit einer Wärmeleitfähigkeit von 0,024 [W/(m.K)] bei 20°C ist.

3. Positionserfassungsvorrichtung (100) mit einer Positionserfassungseinrichtung (2), die zum Erfassen einer Position eines Erfassungsobjekts ausgebildet ist, und mit einer Temperaturerfassungseinrichtung (1), die zum Erfassen einer Umgebungstemperatur um das Erfassungsobjekt herum ausgebildet ist, wobei die Temperaturerfassungseinrichtung (1) den Temperatursensor (10) gemäß Anspruch 1 oder 2 aufweist.

4. Verfahren zum Herstellen eines Temperatursensors (10) gemäß Anspruch 1 oder 2, wobei das Verfahren folgende Schritte aufweist:
Bereitstellen eines ersten Teils des Temperatursensors (10), wobei der erste Teil ein Drahtelement (14), ein mit dem einen Ende des Drahtelements (14) verbundenes Temperatursensorelement (11), einen Halter (16), an dem das andere Ende des Drahtelements (14) befestigt ist, ein Substrat (17), mit dem das andere Ende des Drahtelements (14) elektrisch verbunden ist, sowie ein Wärmeisolierelement (17) aufweist, das um das Drahtelement (14) herum an einer Stelle in der Nähe des Temperatursensorelements (11) befestigt ist;
Bereitstellen eines Gehäuses (20), das einen kastenförmigen Körperbereich (21) mit einer offenen Oberfläche, ein rohrförmigen Bereich (22), der von dem Körperbereich (21) nach außen ragt und in einer Rohrform ausgebildet ist, die auf einer eine Spitze (22a) bildenden Seite geschlossen ist, sowie eine Abdeckung (23) aufweist, die die offene Oberfläche des Körperbereichs (21) verschließt;
Einsetzen des ersten Teils des Temperatursensors (10) in das Gehäuse (20), wobei das Temperatursensorelement (11) derart in den rohrförmigen Bereich (22) eingesetzt wird, dass es an der Spitze (22a) angeordnet ist, und wobei der Halter (16) und das Substrat (17) in dem Körperbereich (21) platziert werden;
Füllen eines Haltematerials (25) in einem verflüssigten Zustand in einen Spalt zwischen dem Drahtelement (14) und dem rohrförmigen Bereich (22) sowie einen Spalt zwischen dem Halter (16), dem Substrat (17) und dem Körperbereich (21); und
durch Wärmebehandlung erfolgendes Aushärten des Haltematerials (25), um als Resultat einen Zustand zu erzielen, in dem das Haltematerial (25) das Drahtelement (14) hält.

5. Verfahren nach Anspruch 4,
wobei das Drahtelement (14) gebogen wird, wenn das Temperatursensorelement (11) bis zu der Spitze (22a) nach innen geschoben wird, so dass das Temperatursensorelement (11) in einen sicher nach innen geschobenen Zustand gebracht wird.

## Revendications

1. Capteur de température (10) comprenant :
un boîtier (20) comprenant un partie corps (21) et une partie tubulaire (22) faisant saillie vers l'extérieur de la partie corps (21), la partie tubulaire (22) présentant une forme tubulaire fermée d'un côté définissant une pointe (22a) ;
un élément capteur de température (11) disposé à l'intérieur de la partie tubulaire (22) à la pointe (22a) ;
un élément filaire (14) dont une extrémité est connectée à l'élément capteur de température (11) ;
un support (16) auquel est fixée l'autre extrémité de l'élément filaire (14) ;
un substrat (17) auquel l'autre extrémité de l'élément filaire (14) est connectée électriquement, le support (16) et le substrat (17) étant placés dans la partie corps (21) ;
une partie de retenue (22c) disposée à l'intérieur de la partie tubulaire (22) à une position plus proche de la partie corps (21) que l'élément capteur de température (11), la partie de retenue (22c) étant remplie d'un matériau de retenue (25) afin de soutenir l'élément filaire (14), sachant qu'un espace entre le support (16), le substrat (17) et la partie corps (21) du boîtier (20) est rempli du matériau de retenue (25) ; et
une section calorifuge (30) disposée entre l'élément capteur de température (11) et la partie de retenue (22c), la section calorifuge (30) comprenant un élément calorifuge (31) constitué d'un matériau moins thermo-transférable que le matériau de retenue (25),
dans lequel l'élément calorifuge (31) dans la section calorifuge (30) est fixé autour de l'élément filaire (14) à une position proche de l'élément capteur de température (11),
dans lequel l'élément capteur de température (11) est pressé contre la pointe (22a) de la partie tubulaire (22),
dans lequel l'élément calorifuge (31) est constitué de mousse de polystyrène ou de résine phénolique,
dans lequel la section calorifuge (30) comprend un partie d'espace (22b) remplie de gaz conservé entre l'élément calorifuge (31) et l'élément capteur de température (11), et
dans lequel le matériau de retenue (25) est constitué d'époxy.

2. Le capteur de température selon la revendication 1, dans lequel le matériau de retenue (25) est constitué d'époxy avec une conductivité thermique de 0,3 [W/(m.K)] à 20 °C, l'élément calorifuge (31) est constitué de mousse de polystyrène avec une conductivité thermique de 0,03 [W/(m.K)] à 20 °C, et le gaz dans la partie d'espace (22b) est de l'air avec une conductivité thermique de 0,024 [W/(m.K)] à 20 °C.

3. Dispositif de détection de position (100) comprenant un moyen de détection de position (2) configuré de manière à détecter une position d'un objet de détection, et un moyen de détection de température (1) configuré de manière à détecter une température ambiante autour de l'objet de détection, dans lequel le moyen de détection de température (1) comprend le capteur de température (10) selon la revendication 1 ou 2.

4. Procédé de fabrication d'un capteur de température (10) selon la revendication 1 ou 2, le procédé comprenant :
la préparation d'une première partie du capteur de température (10), la première partie comprenant un élément filaire (14), un élément capteur de température (11) connecté à une extrémité de l'élément filaire (14), un support (16) auquel est fixée l'autre extrémité de l'élément filaire (14), un substrat (17) auquel l'autre extrémité de l'élément filaire (14) est connectée électriquement, et un élément calorifuge (17) fixé autour de l'élément filaire (14) à une position proche de l'élément capteur de température (11) ;
la préparation d'un boîtier (20) qui comprend une partie corps en forme de boîte (21) ayant une surface ouverte, une partie tubulaire (22) faisant saillie vers l'extérieur de la partie corps (21) et de forme tubulaire fermée d'un côté définissant une pointe (22a), et un couvercle (23) fermant la surface ouverte de la partie corps (21) ;
l'insertion de la première partie du capteur de température (10) dans le boîtier (20), l'élément capteur de température (11) étant inséré dans la partie tubulaire (22) pour être disposé à la pointe (22a), et le support (16) et le substrat (17) étant placés dans la partie corps (21) ;
le remplissage d'un matériau de retenue (25) à l'état liquéfié dans un espace situé entre l'élément filaire (14) et la partie tubulaire (22) et un espace entre le support (16), le substrat (17) et la partie corps (21) ; et
le durcissement par traitement thermique du matériau de retenue (25), aboutissant à un état où le matériau de retenue (25) retient l'élément filaire (14).

5. Le procédé selon la revendication 4, dans lequel l'élément filaire (14) est fléchi lorsque l'élément capteur de température (11) est enfoncé jusqu'à la pointe (22a) de sorte que l'élément capteur de température (11) est amené dans un état enfoncé de manière sécurisée.
